# EUROPÄISCHE PATENTSCHRIFT

(11) **EP 1 010 030 B1**
(45) Veröffentlichungstag und Bekanntmachung des Hinweises auf die Patenterteilung: **14.11.2001**
(21) Anmeldenummer: 98949984.3
(22) Anmeldetag: 03.09.1998
(51) Int. Cl.: G02B 21/06, G02B 21/16

(54) **MIKROSKOP, INSBESONDERE FLUORESZENZMIKROSKOP, INSBESONDERE STEREO-FLUORESZENZMIKROSKOP**
MICROSCOPE, ESPECIALLY A FLUORESCENCE MICROSCOPE, PARTICULARLY A STEREO FLUORESCENCE MICROSCOPE
MICROSCOPE, NOTAMMENT MICROSCOPE A FLUORESCENCE, EN PARTICULIER MICROSCOPE A FLUORESCENCE STEREO

(30) Priorität: 05.09.1997 CH 209097
(43) Veröffentlichungstag der Anmeldung: 21.06.2000
(73) Patentinhaber: Leica Microsystems AG, 9435 Heerbrugg (CH)
(72) Erfinder: AMANN, Thomas, A-6841 Mäder (AT); STERBAN, Jurij, CH-9435 Heerbrugg (CH); ROTTERMANN, Ruedi, CH-9442 Berneck (CH); SOPPELSA, Peter, CH-9436 Balgach (CH); ZIMMERMANN, Heinz, CH-9436 Balgach (CH)
(74) Vertreter: Reichert, Werner F., Dr.
(86) Internationale Anmeldenummer: EP9805587
(87) Internationale Veröffentlichungsnummer: WO9913370

(56) Entgegenhaltungen:
- EP-A- 0 482 340
- GB-A- 2 102 149
- GB-A- 2 251 701

## Beschreibung

Die Erfindung betrifft ein Mikroskop nach dem Oberbegriff des Anspruches 1. Es geht im Wesentlichen um ein neuartiges Beleuchtungssystem für die Mikroskopie. Dem Fachmann liegen die Vorteile und Anwendungsmöglichkeiten der Erfindung für Beleuchtungen jeglicher Art im Bereich der Mikroskopie auf der Hand. Stellvertretend für die verschiedensten Beleuchtungsarten wird jedoch im Folgenden insbesondere auf die Besonderheiten im Bereich der Beleuchtung mittels Fluoreszenzlichts eingegangen, für die die Erfindung bevorzugt zum Einsatz gelangen soll. Obzwar die Erfindung für die verschiedensten Typen von Mikroskopen vorteilhaft ist, wird im Folgenden insbesondere auf Stereomikroskope eingegangen.

Für die Fluoreszenzmikroskopie wird häufig das Auflichtprinzip nach Ploem verwendet. Durch die Entdeckung des grün fluoreszierenden Proteins GFP (Green Fluorescent Protein) ist ein Bedarf für Fluoreszenz-Stereomikroskope entstanden, weil mit dem nicht-toxischen GFP auch lebende Organismen untersucht werden können. Dazu ist das Stereomikroskop dank dem aufrechten, seitenrichtigen und 3-dimensionalen Bild sowie dem grossen Arbeitsabstand besser geeignet, als das klassische 2-D-Mikroskop. Letzteres ist z.B. in der Leica-Firmenschrift 913894 dargestellt. Folgende Lösungen für Fluoreszenzmikroskopie mit 3-D-Mikroskopen sind bekannt:
a) Separate Beleuchtung:
   Der Beobachter benutzt ein herkömmliches Stereomikroskop. An einer geeigneten Stelle wird ein Sperrfilter in die Beobachtungsstrahlengänge eingesetzt. Es kann sich dabei um ein Filter handeln, das beide Strahlengänge überdeckt oder um je ein Filter in den beiden Strahlengängen des Stereomikroskops. Die Beleuchtung des Objekts erfolgt unabhängig - z.B. seitlich - von der Stereomikroskop-Optik. Das Anregungsfilter ist im Beleuchtungsstrahlengang angeordnet. Ein solcher Aufbau findet sich z.B. in der DE-A-2348567, wobei dort eine ringförmige Lichtröhre angewendet wird, die das Hauptobjektiv umgibt und ihrerseits durch einen Faltenbalg von der Umgebung abgeschirmt ist. Ein Durchlichtmikroskop mit einer Fluoreszenzbeleuchtung gegen das Objektiv ist beispielsweise unter der Bezeichnung "Leitz Fluoreszenz Mikroskop mit Orthomat" auf den Markt gebracht worden.
b) Beleuchtung durch das Stereomikroskop:
   Zwischen dem Vergrösserungswechsler und dem Binokulartubus des Stereomikroskops ist in jedem Strahlengang ein Fluoreszenzilluminator nach Ploem mit einem Erregerfilter, dichromatischem Teilerspiegel und Sperrfilter angeordnet. Es genügt, wenn die Beleuchtung nur in einen der beiden Strahlengänge eingekoppelt wird. Im ändern Strahlengang braucht es dann das Erregerfilter nicht. Die dichromatischen Teilerspiegel und/oder die Sperrfilter können zu einem Bauteil zusammengefasst sein, das beide Strahlengänge überdeckt. Ein solches System ist beispielsweise in den Firmenschriften: "Leica Stereo-Fluoreszenzsystem" (Druckschriften-Nr.: M1-203-3de; IV.96) und "Leica-Stereo-Fluoreszenzsystem" (Druckschriften-Nr.: M1-203-4de; IV.96) beschrieben und ist ebenso in einer früheren Leica-Firmenschrift (Druckschriften-Nr.: M1-143-4de; II.97) dargestellt.

Nicht-fluoreszierende Beleuchtungen durch das Mikroskop sind beispielsweise auch in den Dokumenten US-A-3 512 860, DE-A-3 339 172 und DE-A-3 427 592 dargestellt. Beim Aufbau gemäss dem ersten und zweiten Zitat wird Licht über Teilerspiegel vor dem bzw. durch das Hauptobjektiv direkt in den Beobachtungsstrahlengang eingespiegelt; beim Aufbau gemäss dem dritten Zitat wird ein Beleuchtungsstrahlengang schräg zum Beobachtungsstrahlengang neben dem Hauptobjektiv auf das Objekt gelenkt. Dem zweiten Zitat vergleichbar ist ein Beleuchtungssystem beim Stereomikroskop "M650" der Anmelderin, bei dem der Beleuchtungsstrahlengang zusätzlich noch über einen Vergrösserungswechsler verfügt, der mit dem Vergrösserungswechsler der Beobachtungsstrahlengänge mechanisch gekoppelt ist, so dass sowohl die Bildfeldausleuchtung als auch die Helligkeit der jeweiligen Vergrösserung angepasst ist, wie z.B. in der Leica-Firmenschrift mit der Druckschriften-Nr.: M1-601-0fr; IX.94 dargestellt.

Dieser Stand der Technik weist folgende Nachteile auf:
a) Bei separater Beleuchtung:
   Die Beleuchtungsoptik wird bei einer Änderung der Vergrösserung nicht der sich ändernden Grösse des Objektfeldes angepasst. Dadurch ist bei schwacher Vergrösserung nur ein Teil des Objektfeldes beleuchtet und/oder bei hoher Vergrösserung werden auch nicht sichtbare Objektpartien unnötig beleuchtet. Deshalb ist die Beleuchtungsstärke bei hoher Vergrösserung geringer, als wenn der gesamte Lichtstrom auf das kleine Objektfeld konzentriert würde.
b) Bei Beleuchtung durch das Stereomikroskop:
   Das Anregungslicht durchflutet im Vergrösserungswechsler die gleichen optischen Bauteile, die auch zur Beobachtung des fluoreszierenden Objekts benutzt werden. Das erfordert, dass alle diese Optikkomponenten eine hohe Transparenz für UV- und Blaulicht aufweisen und frei von Eigenfluoreszenz sein müssen. Abhängig von der gewählten Vergrösserung können auch Partien im Umfeld der Linsen unerwünschterweise mit Anregungslicht bestrahlt werden. Auch dort darf kein Fluoreszenzlicht erzeugt werden. In der Praxis sind diese Anforderungen nur mit hohem Aufwand zu erfüllen. Bis anhin werden bei der Gerätekonstruktion Kompromisse eingegangen: So wird einerseits die Bestrahlungsstärke des Objekts mit Anregungslicht reduziert und andererseits im Vergrösserungswechsler bzw. in dem bzw. den Beobachtungsstrahlengängen unerwünschtes Fluoreszenzlicht erzeugt, das sich demjenigen vom Objekt überlagert und so die Bildqualität beeinträchtigt. Darüber hinaus auftretende Eigenfluoreszenzen von Linsenkitt, Staub und Gehäuseteilen stören gegebenenfalls zusätzlich.

Die erwähnten Mikroskope der Anmelderin (z.B. "M650" oder auch "M690" - mit einem Zoom - ), die einen eigenen Beleuchtungsstrahlengang mit Vergrösserungseinstellung aufweisen, wobei der Vergrösserungswechsler der Beobachtungsstrahlengänge mit dem Vergrösserungswechsler des Beleuchtungsstrahlenganges gekoppelt ist, so dass grundsätzlich die Objektbeleuchtung der jeweiligen Vergrösserung angepasst ist, benötigen eben einen räumlich getrennten, zusätzlichen Vergrösserungswechsler und ein entsprechendes Koppelgetriebe, weshalb diese Aufbauten recht voluminös sind. Die Anwendung eines solchen Mikroskops durch Ersatz der herkömmlichen Beleuchtung durch eine Fluoreszenzlichtquelle und entsprechende Filter ist darüber hinaus auch noch nicht angeregt worden. Wobei in einem solchen Fall wieder das Problem der Eigenreflexion unerwünschter Fluoreszenzlichtstrahlen zwischen Hauptobjektiv und Vergrösserungswechsler auftreten könnte; dies insbesondere deshalb, weil der eingespiegelte Beleuchtungsstrahlengang in einem gewissen Winkel schräg zu den Beobachtungsstrahlengängen auf dem Hauptobjektiv auftritt.

Die vorliegende Erfindung hat somit zum Ziel, ein Mikroskop mit einem optimierten Beleuchtungsstrahlengang zu schaffen. Insbesondere soll ein Mikroskop, vorzugsweise ein Stereomikroskop, für die Beobachtung von fluoreszierenden Objekten geschaffen werden, das die Nachteile des Standes der Technik vermeidet. Insbesondere soll die Objektbeleuchtung mit Anregungslicht der jeweils gewählten Vergrösserung angepasst sein. Zudem soll die Beleuchtungsoptik eine hohe Transparenz für UV- und Blaulicht aufweisen und die Bildqualität darf nicht durch instrumenten-interne Eigenfluoreszenz beeinträchtigt werden.

Diese Aufgaben werden durch ein Mikroskop gemäß Anspruch 1 gelöst.

Es wird zwar bereits als erfinderisch betrachtet, den einen Erfindungsgedanken zum Zweck des Umbaus eines dem "M650" oder "M690" der Anmelderin vergleichbaren Mikroskops auf ein Fluoreszenzmikroskop, indem die herkömmliche Lichtquelle durch eine Fluoreszenzlichtquelle ersetzt wird und entsprechende Anregungs- und Sperrfilter eingebaut werden. Ein solcher neuartiger Aufbau hätte immerhin den Vorteil, dass das Anregungslicht konzentriert und somit anwendungsökonomisch auf das Objekt fällt - und zwar unabhängig von der jeweils gewählten Vergrösserung der Beobachtungsstrahlengänge dieser Mikroskope. Die Erfindung geht jedoch darüber weiter hinaus und versucht auch solche Aufbauten noch zu verbessern.

Weiterhin wird erfindungsgemäss vorgeschlagen, den Vergrösserungswechsler des Stereomikroskops mit einem dritten Strahlengang für das Anregungslicht zu ergänzen. Dadurch werden die beiden Beobachtungsstrahlengänge nicht mehr vom Anregungslicht durchflutet. Eventuelle Eigenfluoreszenzen im Beleuchtungsstrahlengang stören die Beobachtung nicht. Der Beleuchtungsstrahlengang kann auf eine verbesserte UV- und Blaulicht-Transparenz optimiert werden, ohne dass Rücksicht auf die Abbildungsqualität des Beobachtungsstrahlenganges genommen werden muss. Die Einkopplung des Anregungslichts in den erwähnten dritten Strahlengang des Vergrösserungswechslers ist sehr einfach; es braucht dazu keinen dichromatischen Teilerspiegel. Die Wechseleinrichtung für das Anregungs- und das Sperrfilter kann somit einfacher gestaltet werden.

Insbesondere wenn die Einkopplung so erfolgt, dass alle Strahlengänge im Bereich des Vergrösserungswechslers parallel verlaufen, kann es auch an der Innenseite des Hauptobjektivs nicht zu störenden Eigenreflexionen kommen, da diese gegebenenfalls in den Beleuchtungsstrahlengang zurückreflektiert würden.

Weitere vorteilhafte Ausgestaltungen und Varianten dazu sind in den Patentansprüchen beschrieben bzw. unter Schutz gestellt. Zusätzliche Varianten ergeben sich aus der Figurenbeschreibung.

Das Stereomikroskop gemäss der vorliegenden Erfindung ist sowohl bei Greenough-Stereomikroskopen als auch bei Stereomikroskopen mit gemeinsamem Hauptobjektiv anwendbar.

Wird in den Beobachtungsstrahlengang zusätzlich ein UV-Schutzfilter (z.B. "GG 420") fest eingebaut, so ist der Beobachter vor schädlichem UV-Licht geschützt, auch wenn er das Sperrfilter entfernt.

Werden das Anregungsfilter und das Sperrfilter entfernt, so kann das Objekt im Auflicht beobachtet werden. Da die Beleuchtung sehr steil auf das Objekt auftrifft, ist diese Einrichtung ideal zum Untersuchen tiefer Löcher. Der Ersatz oder die zusätzliche Anordnung einer Normallichtquelle für den Beleuchtungsstrahlengang ist technisch einfach lösbar. Beispielsweise könnte auch ein Umschalter oder eine Abdeckklappe vorgesehen sein, der/die ein permanent installiertes Normallicht über einen Teilerspiegel in den Beleuchtungsstrahlengang einblendet, wie dies z.B. bei dem bekannten Durchlichtfluoreszenz-Mikroskop "LN Galileo" realisiert war.

Vorteilhaft ist es, wenn das Anregungs- und das Sperrfilter unabhängig voneinander wechselbar sind, um beliebige Filter-Kombinationen darstellen zu können. Erfindungsgemäss sind dabei die Filter auf einem als Scheibe oder Schieber ausgebildeten Filterwechsler zu mehreren Sätzen von Anregungs- und Sperrfiltern montiert. Dadurch lässt sich rasch zwischen verschiedenen Fluoreszenzverfahren umschalten. Ein bevorzugt angeordneter, von der Filterscheibe angetriebener Verschluss unterbricht den Beleuchtungsstrahlengang beim Wechsel von einem zum anderen Filtersatz. Demzufolge ist die Sicherheit für den Betrachter gewährleistet. Ein gegebenenfalls zusätzlich vorhandener Schieber erlaubt es, den Beleuchtungsstrahlengang auch manuell zu unterbrechen. Derart kann das Mikroskop auch mit konventioneller Beleuchtung verwendet werden, ohne die Lichtquelle für Fluoreszenzbetrachtung abzuschalten. Vorteilhafterweise entfällt derart das Warten beim Abkühlen und Wiederstarten der Fluoreszenzlampe.

Die Filtersätze sind durch Einbettung in Filterträger gut bedienbar und durch die Aufnahme im Filterwechsler gegen Verschmutzung und Beschädigung geschützt. Im Gegensatz zu aufwendigen und voluminösen dichroitischen Spiegeln oder Prismen, die bei bekannten Geräten als Wechselfilter für die Einspiegelung in den Beobachtungsstrahlengang angewendet wurden, sind die erfindungsgemässen flachen Filtersätze kostengünstiger und optimal integrierend einbaubar.

Der Filterwechsel erfolgt ohne Hilfsmittel, so dass die Arbeitsgeschwindigkeit optimiert ist.

Wie an sich bekannt, kann parallel zu dem Beobachtungsstrahlengang wenigstens ein Assistententubus angeschlossen sein, dessen Strahlengang über wenigstens eine Teilspiegelfläche zwischen den Okularen des Beobachtungsstrahlenganges und den Filtern ausgespiegelt ist. Derart können auch Assistenten problemlos das fluoreszierende Objekt betrachten.

Gemäss einer besonderen Ausgestaltung der Erfindung wurde zur Platzoptimierung (alle Strahlengänge in einem möglichst schmalen, zylinderförmigen Raum) das Hauptobjektiv-Zentrum zum Querschnitt dieses zylinderförmigen Raumes aussermittig verschoben.

Zur weiteren Platzoptimierung kann der Beleuchtungsstrahlengang auch aufgeteilt sein, wobei dann die Achsen der Beobachtungsstrahlengänge wieder in eine Radialebene des zylinderförmigen Raumes verschoben werden. Der Zylinderdurchmesser kann bei diesem Aufbau weiter reduziert werden.

Altemativ können alle Strahlengänge gemeinsam ein Hauptobjektiv durchsetzen, oder es kann jeder Strahlengang für sich selbst ein eigenes Hauptobjektiv aufweisen, was eventuell auftretende Reflexionsstörungen gänzlich ausschalten würde.

Wünscht man aus beleuchtungstechnischen Gründen eine schräge Beleuchtung des Objekts, so kann nach dem Hauptobjektiv auch ein entsprechendes optisches Element vorgesehen sein, das die Beleuchtung entsprechend lenkt.

Zum Schutz der Beobachter und Unbeteiligter ist es denkbar, konzentrisch zum Hauptobjektiv einen Faltenbalg vorzusehen, der den Raum zwischen Objekt und Hauptobjektiv nach aussen abschirmt.

Im Folgenden wird die Erfindung an praktisch realisierten Beispielen, die jedoch nicht einschränkend sind, verdeutlicht. Da ein Anwendungsgebiet die Stereo-Fluoreszenzmikroskopie ist, wird sie insbesondere an einem neuartigen beispielhaften Stereo-Fluoreszenzmikroskop dargelegt. Sie ist jedoch in keiner Weise auf Fluoreszenzmikroskopie eingeschränkt, sondern umfasst durchaus auch alle anderen Arten von Lichtmikroskopie, wie einem Fachmann bei Studium der Patentansprüche unmissverständlich deutlich wird. Da die Anordnung des neuen Beleuchtungsstrahlenganges bei diesen anderen Arten der Lichtmikroskopie im Wesentlichen identisch ist, wie bei der Fluoreszenzmikroskopie, ergibt sich für den Fachmann aus der nachfolgenden Beschreibung auch die beste Ausführungsmethode der Erfindung für diese anderen Arten unter Berücksichtigung der jeweiligen, bekannten Besonderheiten dieser anderen Arten. So entfällt z.B. bei den meisten anderen Arten der Einbau von Fluoreszenzfiltern o.dgl.

Die Figuren sind übergreifend beschrieben. Gleiche Bezugszeichen bedeuten gleiche Bauteile; Bezugszeichen mit unterschiedlichen Bezugsziffern bedeuten funktionsgleiche, jedoch vom Aufbau oder von der Lage her unterschiedliche Bauteile.

### Es zeigen die Figuren:

- Fig. 1:: das Prinzip eines neuartigen Stereomikroskops mit integriertem Beleuchtungsstrahlengang für Fluoreszenzmikroskopie;
- Fig.2a und 2b:: zwei Varianten der räumlichen Strahlenganganordnung, wobei Fig.2b eine erfindungsgemäss besonders platzsparende Variante darstellt;
- Fig. 3:: einen Aufbau mit über Spiegel geteiltem Beleuchtungsstrahlengang;
- Fig. 4:: einen Schnitt durch einen Aufbau mit geteiltem Beleuchtungsstrahlengang bei durchmesser-optimiertem Hauptobjektiv;
- Fig. 5:: einen Schnitt durch ein erfindungsgemässes Mikroskop mit einem Verschluss für den Beleuchtungsstrahlengang;
- Fig. 6:: einen vergleichbaren Schnitt nach Fig.5, jedoch etwas darüber oder darunter mit eingesetztem Wechselfilterträger;
- Fig. 7:: einen vergleichbaren Schnitt nach Fig.5 oder 6, jedoch darüber mit einem Einblendprisma für den Beleuchtungsstrahlengang und einer Lichtquelle;
- Fig. 8:: ein Detail nach Fig.6;
- Fig. 9:: einen vergleichbaren Schnitt nach Fig.7, jedoch etwas darüber;
- Fig.10:: einen Schnitt durch die Darstellung gem. Fig.9 nach der Linie X-X;
- Fig.11 und 12:: Varianten von Sperrschieber und Dämpfungsfilter zum Einschub in Kanäle beim Anschluss für die Lichtquelle;
- Fig.13:: eine Variante für schiebbare Wechselfilterträger in Draufsicht;
- Fig.14:: einen Schnitt durch die Variante nach Fig.13 entlang der Linie XIV-XIV;
- Fig.15 und 16a-e:: verschiedene alternative Filter-Sets;
- Fig.17:: einen vergleichbaren Schnitt durch eine Darstellung nach Fig.7, jedoch darunter (im Bereich des Zooms);
- Fig.18:: einen vergleichbaren Längsschnitt durch ein erfindungsgemässes Zoom und
- Fig.19:: einen symbolischen Aufbau mit schrägem Lichteinfall auf das Objekt.

Der erfindungsgemässe Aufbau umfasst mehrere, voneinander an sich unabhängige und auch unabhängig einsetzbare erfinderische Lösungsmerkmale.

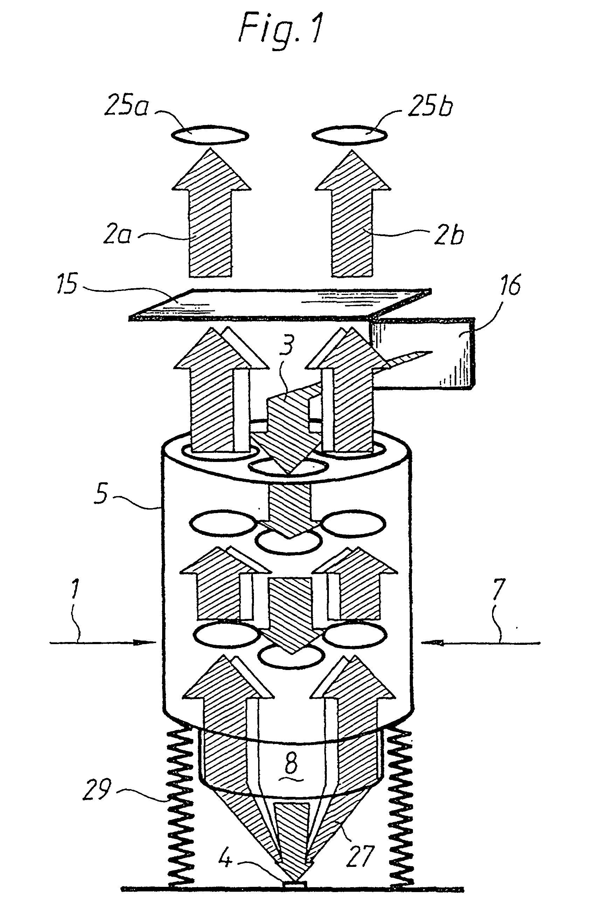

Aus Fig.1 erkennt man einen herkömmlichen Stereomikroskopaufbau mit Beobachtungsstrahlengängen 2a und 2b, die Licht 27 von einem Objekt 4 durch ein Hauptobjektiv 8, durch einen Vergrösserungswechsler 1, der in diesem Fall beispielsweise als Zoom ausgebildet ist, zu einem Binokulartubus 25a,b lenken. Der Vergrösserungswechsler 1 umfasst in einem Gehäuse 5 Linsenschieber 7, an denen die Linsen der Optik gehalten sind. Neu ist diesem Aufbau hinzugefügt ein dritter Beleuchtungsstrahlengang 3, der ebenso durch den Vergrösserungswechsler 1, parallel zu den Beobachtungsstrahlengängen 2 geführt ist. Dieser Beleuchtungsstrahlengang 3 spiegelt von seitlich, über an sich bekannte Massnahmen, Licht durch eigene Linsen an den Linsenschiebern 7 und durch das Hauptobjektiv 8 auf das Objekt 4. Erfindungsgemäss handelt es sich dabei um eine normale Beleuchtung, oder - wie im dargestellten Beispiel - um eine Fluoreszenzbeleuchtung, die durch ein Erregerfilter 16 auf eine spezielle Lichtbandbreite eingestellt ist. Für diesen Fluoreszenzaufbau ist weiterhin ein herkömmliches Sperrfilter 15 angedeutet, das ebenso für eine spezielle andere Lichtbandbreite durchlässig ist. Ein Beobachter kann somit beim Blick durch das Binokular 25a,b nur jenes Licht erkennen, das vom Objekt stammt, durch welches Fluoreszenzlicht im Strahlengang 3 angeregt wurde und vom Sperrfilter 15 durchgelassen wird. Gegenüber Fremdbetrachtern, die neben dem Mikroskop stehen, sind eventuell auftretende Erregerstrahlen sicherheitshalber - aber nicht zwingend - mittels Faltenbalg 29 abgeschirmt. Anstelle eines Faltenbalges 29 könnten auch ― wie an sich bekannt-transparente Filterscheiben o.dgl. vorgesehen sein.

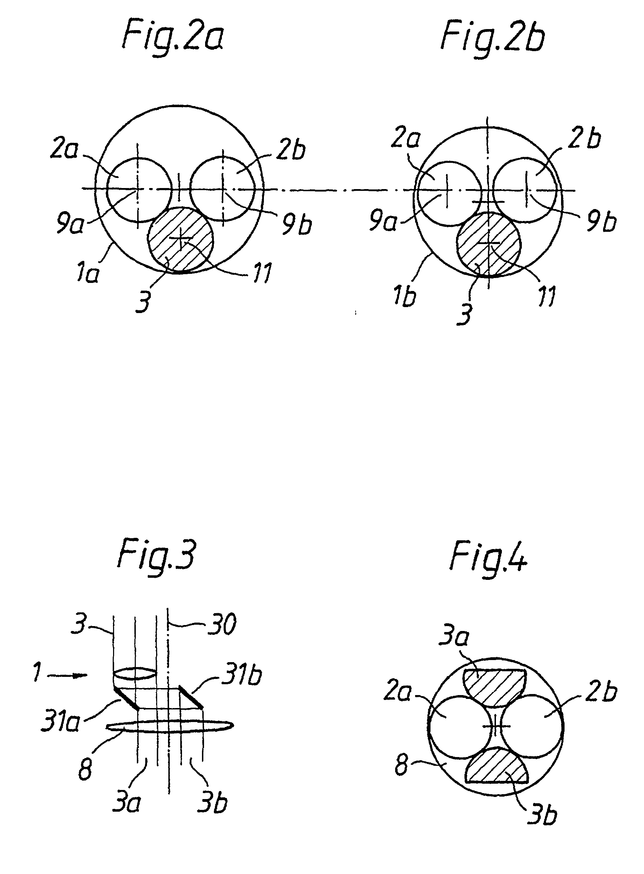

Fig.2a zeigt einen Schnitt durch einen Vergrösserungswechsler 1a mit einer herkömmlichen Anordnung der beiden Beobachtungsstrahlengänge 2a,b. Deren Achsen 9a,b liegen auf einer Axialebene durch den zylinderförmigen Raum, der durch den Vergrösserungswechsler 1a umschrieben wird. Es ergibt sich daraus ein grösserer Umfang des Raumes und damit ein voluminöserer Vergrösserungswechsler 1a als beim Aufbau gemäss Fig.2b, bei dem die Achsen 9a,b auserhalb einer Axialebene angeordnet wurden. Der Beleuchtungsstrahlengang 3 berührt zwar die beiden Beobachtungsstrahlengänge 2a,b; diese sind jedoch bei beiden Varianten (Fig.2a und b) voneinander beabstandet. Alternativ könnten die beiden Beobachtungsstrahlengänge 2a,b einander berührend zueinander verschoben werden, so dass die Achsen 9a,b mit der Achse 11 des Beleuchtungsstrahlenganges 3 - im Schnitt betrachtet - ein gleichseitiges Dreieck bilden, dessen Schwerpunkt (Mittelpunkt) mit dem Mittelpunkt des Zylinderquerschnittes zusammenfällt. Derart liesse sich der Zylinderraum minimieren. "Berührung" im Sinne der Erfindung bedeutet ein technisch möglichst nahes Aneinanderlegen der Strahlengänge.

Es sind zwar auch andere Mikroskope (z.B.: "M840"), als die eingangs erwähnten, durch die Anmelderin bekannt gemacht geworden, die neben den Beobachtungsstrahlengängen weitere parallele Strahlengänge im Vergrösserungswechsler aufweisen, jedoch dienen diese Strahlengänge der Beobachtung durch allfällige Assistententuben oder durch Videokameras o.dgl.. Die Fachwelt hat jedoch bisher offensichtlich noch nicht erkannt, welche Vorteile sich durch die Benutzung solcher zusätzlicher Strahlengänge für Beleuchtungszwecke ergeben. Insofern fallen auch alle Abänderungen solcher bekannter Aufbauten mit erfindungsgemässen Beleuchtungsstrahlengängen unter die vorliegende Erfindung.

Fig.3 zeigt eine Seitenansicht einer weiteren Variante mit einem um die optische Achse 30 des Hauptobjektives 8 aufgeteilten Beleuchtungsstrahlengang 3a,b. Durch zwei Spiegel 31a,b zwischen Hauptobjektiv 8 und Vergrösserungswechsler 1 wird die eine Hälfte 3b des Beleuchtungsstrahlenganges 3 umgelenkt und die andere unbeeinflusst auf das Objekt gelenkt.

Fig.4 zeigt, wie ein herkömmliches, für die Beobachtung durchmesseroptimiertes Hauptobjektiv 8 auch für die Beleuchtung optimal eingesetzt werden kann, indem der Beleuchtungsstrahlengang in zwei Teilstrahlengänge 3a,b aufgeteilt ist. In diesem Fall bleibt die zu den Beobachtungsstrahlengängen 2a,b symmetrische Anordnung des Hauptobjektivs 8 erhalten.

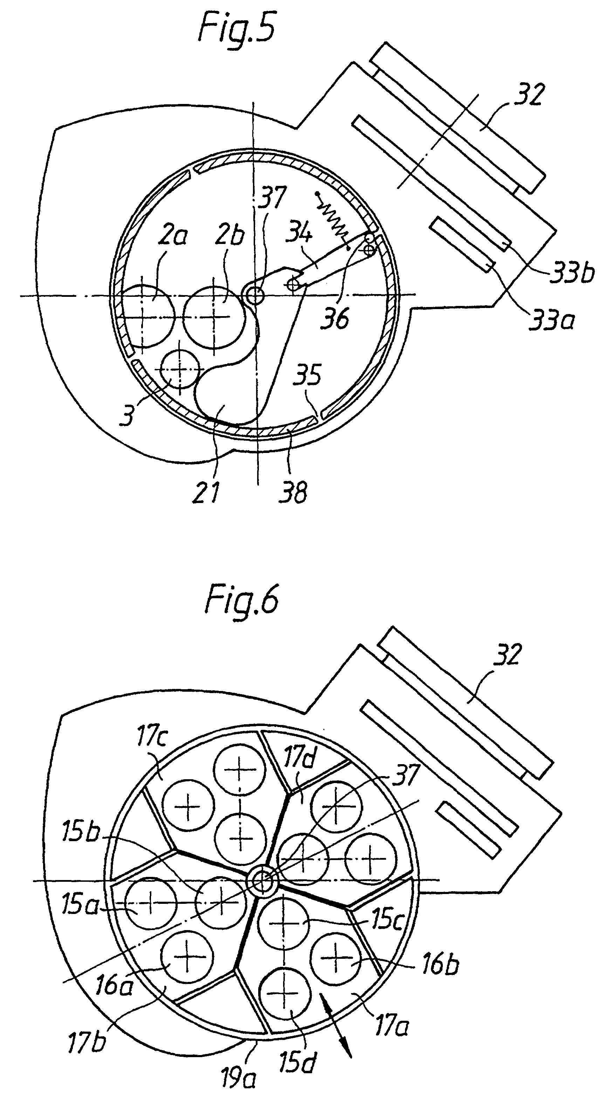

Fig.5 zeigt den Schnitt durch ein Mikroskop, wie es noch nachfolgend näher beschrieben wird. Ein Verschluss 21 ist um eine Schwenkachse 37 schwenkbar gelagert, so dass er wahlweise den Beleuchtungsstrahlengang 3 freigeben oder abdecken kann. Dieser erfindungsgemässe Verschluss 21 kann auch unabhängig von diesem später beschriebenen Mikroskop zur Beleuchtungsabdeckung angewendet werden. Er wird durch einen federbelasteten Schwenkmechanismus 34 angetrieben, der sich mit einem Rastglied 36 an einer Stellwand 38 abstützt. Beim Verdrehen der Stellwand 38 um die Schwenkachse 37 verschliesst der Verschluss 21 den Strahlengang 3. Lediglich in der gezeigten Stellung, wenn das Rastglied 36 in einer Raststelle 35 der Stellwand 38 einrastet, ist der Beleuchtungsstrahlengang 3 frei. Ein unerwünschter Lichtaustritt kann so vermieden werden. Abgesehen von einer unabhängigen Anwendung dieser Detailerfindung, ergibt sich eine besondere Anwendung zusammen mit einem Wechselfilterträger 19a gemäss Fig.6, indem der Verschluß 21 lediglich dann öffnet, wenn die gewünschten Filter 15a-d bzw. 16a,b die jeweiligen Strahlengänge 2,3 queren. Zum Zweck der Filterauswahl wird der Wechselfilterträger 19a und damit die Stellwand 38 um die Achse 37 gedreht. Dies kann von Hand oder motorisch erfolgen.

Der Wechselfilterträger 19a nimmt gem. Fig.6 Filterträger 17 auf, die jeweils drei Filter 15 bzw. 16 aufweisen. Die Filterträger 17 sind von Hand entnehmbar und lagerbar, so dass ein Satz Filterträger eine Vielzahl von Filterkombinationen aufweisen kann, die jeweils besonders rasch ausgewechselt werden können. Ein Doppelpfeil deutet die Austauschposition eines Filterträgers 17 an, der vorzugsweise im Wechselfilterträger eingerastet ist. Der Wechselfilterträger 19a nimmt darüber hinaus vier Filterträger 17 auf, so dass dieser erfinderische Lösungsansatz ein enorm beschleunigtes und universelles Arbeiten erlaubt. Er ist somit auch unabhängig vom übrigen Aufbau erfindungsgemäss einsetzbar.

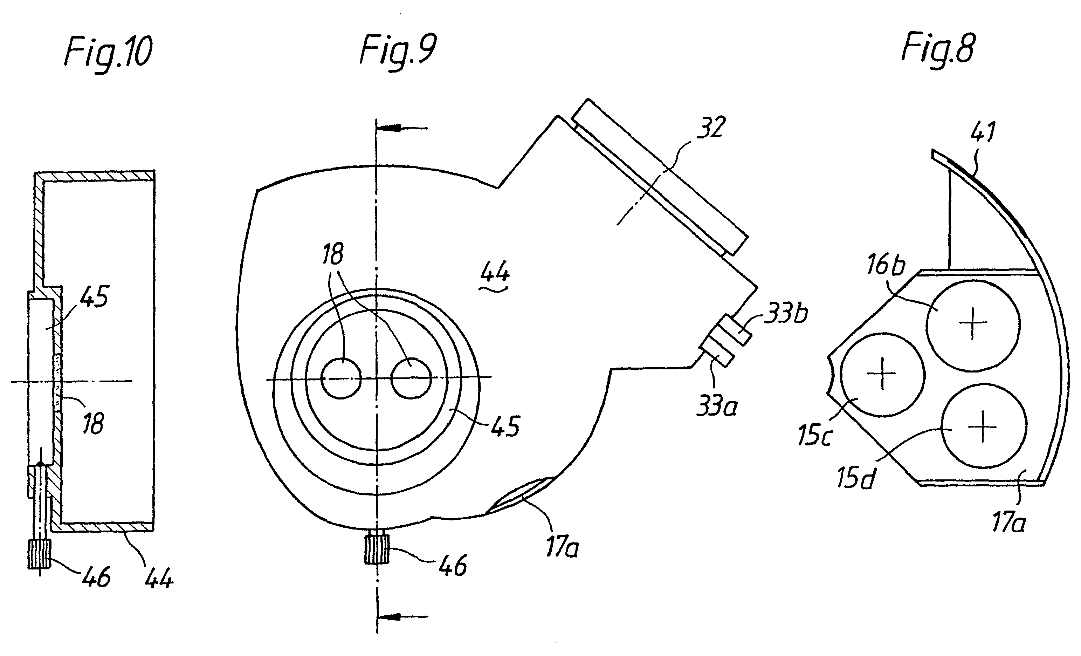

Ein beispielhafter Filterträger 17a ist vergrössert in Fig.8 dargestellt. Als Besonderheit, die die Benutzung der Filtereinsätze erleichtert, ist erfindungsgemäss ein Beschriftungsfeld 41 vorgesehen, das einerseits die zugriffsschnelle Ablage des Filterträgers 17a mit seiner speziellen Filterkombination erlaubt und es andererseits dem Anwender durch einen kurzen Blick durch ein Sichtfenster oder eine Sichtausnehmung am Mikroskop festzustellen ermöglicht, welche Filterkombination gerade im Einsatz ist. Der Teil mit dem Beschriftungsfeld 41 dient gleichzeitig als Griffstück.

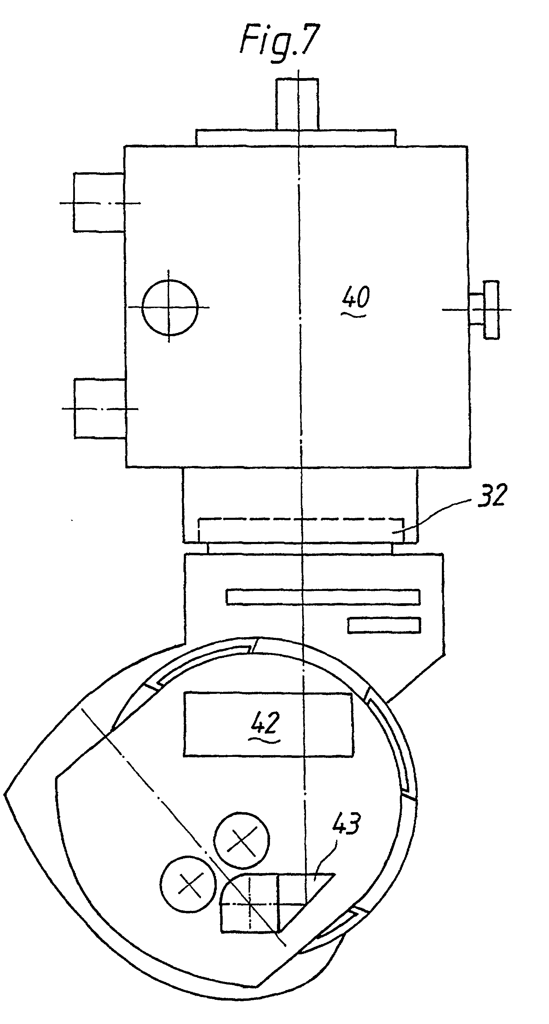

Mit 32 ist in Fig.7 ein Anschluss an eine Lichtquelle 40 dargestellt, die beim vorliegenden Beispiel eine Fluoreszenzlichtquelle oder eine Kombinationslichtquelle ist, jedoch auch durch eine Normallichtquelle ersetzt werden kann. Kanäle 33a,b dienen dem Einschub von weiteren Filtern bzw. Filterschiebern bzw. Abdeckschiebern, die die Lichtzufuhr z.B. für das Manipulieren am Mikroskop wahlweise unterbinden. Das Licht der Lichtquelle 40 wird von dieser seitlich in das Mikroskop gestrahlt und dort über eine - gegebenenfalls entfernbare bzw. austauschbare - Blende 42 geführt. Ein entsprechend ausgebildetes Prisma 43 lenkt das Licht nach unten in den Beleuchtungsstrahlengang 3 um.

Fig.9 und 10 zeigen den Binokularträger 44 mit einem Anschluss 45 an das Mikroskop und mit einem in diesen fest integrierten zusätzlichen Sperrfilter 18 gegen UV-Licht o.dgl. Eine Klemmschraube 46 erlaubt die Montage an einem Universalanschluss.

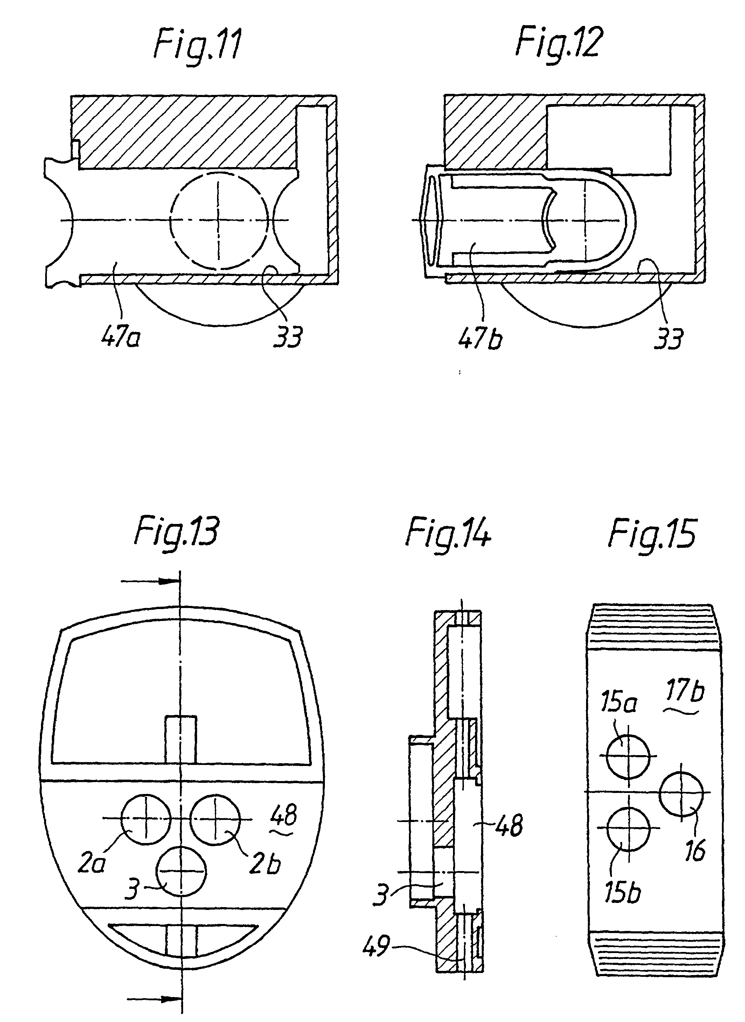

Fig.11 zeigt ein Beispiel eines Sperrschiebers 47a in einem Kanal 33. Eine Alternative dazu ist in Fig.12 dargestellt, wobei der Schieber 47b als Filterhalter ausgebildet ist. Alternativ ist weiterhin ein Graufilter denkbar, das wahlweise in den Kanal 33 einschiebbar ist.

Fig. 13 und 14 zeigen eine Alternative zu einem rotierenden Wechselfilterträger 19a. Dieser Aufbau weist eine Schiene 48 auf, in die seitlich ein Filterträger 17b gemäss Fig.15 einschiebbar ist. Eine angedeutete Klemmschraube 49 kann zur Reibungserhöhung oder Festklemmung des Filterträgers 17b verwendet werden.

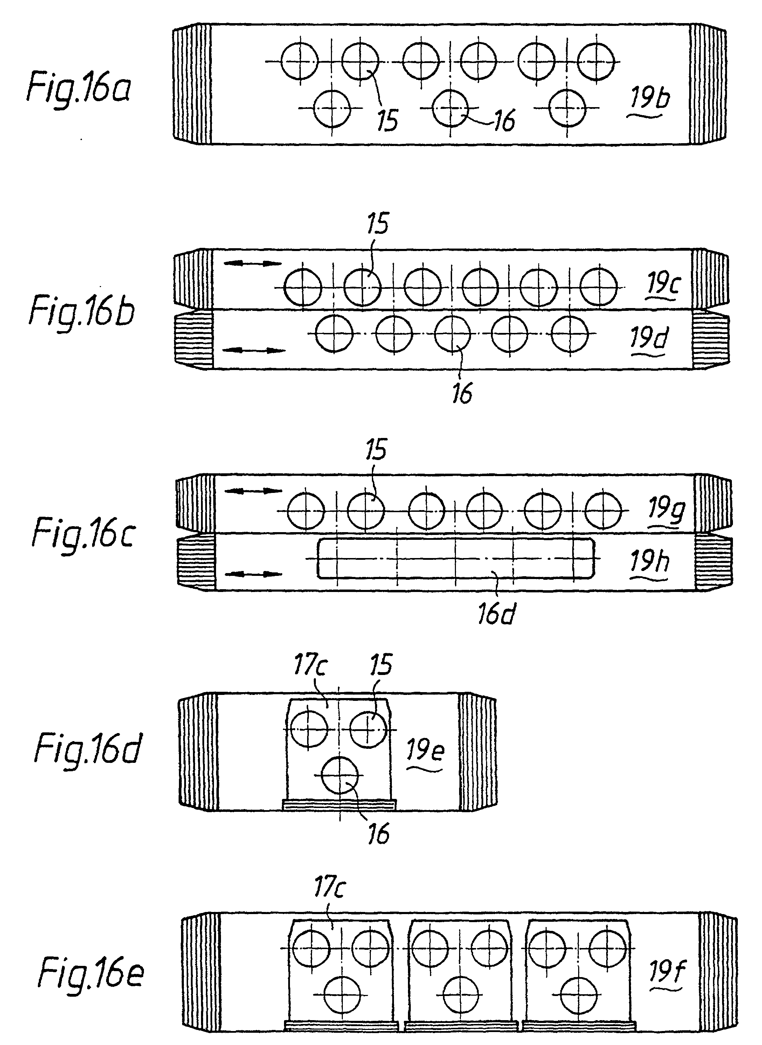

Alternativ zu einem einzelnen verschiebbaren Filterträger 17b können auch seitlich verschiebbare Wechselfilterträger 19b-h gemäss Fig.16a-e zum Einsatz gelangen.

Die jeweils unabhängig einsetzbaren, erfindungsgemässen Eigenschaften dieser Wechselfilterträger sind dabei folgende:
Fig.16a zeigt drei Filtersets 15,16 auf einem Wechselfilterträger 19b;
Fig.16b zeigt drei Filtersets 15 und fünf Filter 16, die unabhängig voneinander einstellbar sind, so daß eine Vielzahl unterschiedlicher Anregungs- bzw. Betrachtungsoptionen möglich sind;
Fig.16c zeigt drei Filtersets 15 und ein unabhängig seitlich verschiebbares Filter 16d; letzteres ist als stufenloses Verlauf-, ― Lichtfrequenzband- oder Helligkeitsverlauf-Filter ausgebildet;
Fig.16d zeigt einen auswechselbarer Filterträger 17c mit einem Filterset 15,16 und
Fig.16e weist - analog zu Fig.16d - drei Filterträger 17c auf. Selbstverständlich ist die Anzahl der jeweiligen Filtersets nur beispielhaft. Weitere Kombinationen liegen im Rahmen dieser Erfindung, die ebenso wie bei den rotierenden Wechselfilterträgem 19a der guten und zeitsparenden Bedienbarkeit eines erfindungsgemässen Mikroskops dienen. Die Filtersets sind auch keineswegs auf Kombinationen von Erreger- und Sperrlichtfiltem eingeschränkt. Die erfindungsgemässen Filtersets können sich auch auf andere in der Mikroskopie einsetzbare Farb- bzw. Filterkombinationen beziehen.

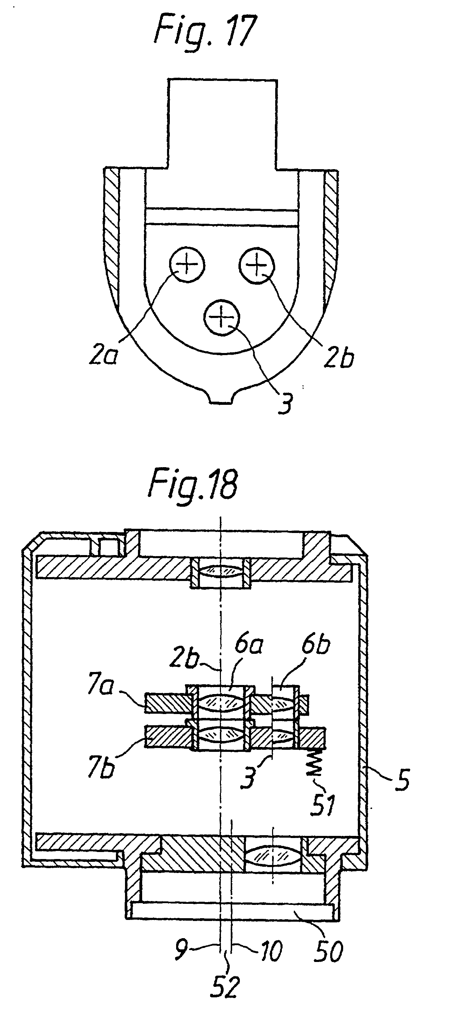

Fig.17 und 18 zeigen ein erfindungsgemässes Zoom mit einem Gehäuse 5 und einem Anschluss 50 für das Hauptobjektiv, mit Linsenschiebem 7a,b, die Zoomglieder 6a,b der Strahlengänge 2 und 3 aufnehmen, und mit dem seitlichen Versatz 52 der Achsen 9 der Beobachtungsstrahlengänge 2 gegenüber einer Axialebene durch die Achse 10 eines durch das Zoom gebildeten zylinderförmigen Raumes um die Strahlengänge 2 und 3. Die übrigen nicht gezeigten oder dargestellten oder lediglich angedeuteten Elemente dieses Aufbaus sind dem Fachmann bekannt und können beispielsweise aus einem Aufbau einer bekannten Vorrichtung der Anmelderin ("M690") entnommen werden, so dass darauf hier nicht näher eingegangen werden muss.

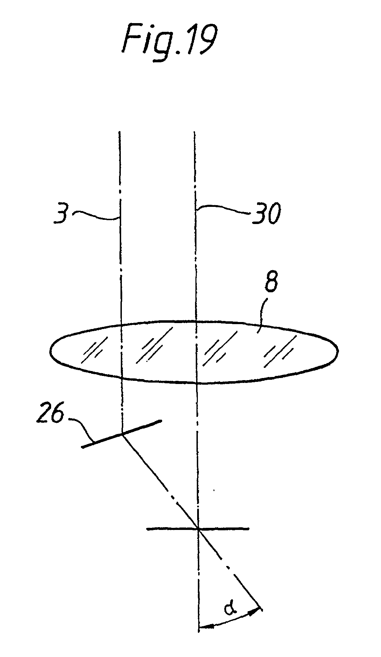

Fig.19 zeigt symbolisch einen Aufbau mit einem Beleuchtungsstrahlengang 3, der ein Hauptobjektiv 8 durchsetzt und danach durch ein optisches Element 26 zur Achse 30 des Hauptobjektivs umgelenkt wird, um dadurch eine schräge Beleuchtung - vgl. Winkel α - zu erzielen. In Abhängigkeit von der Art und der Formgebung des optischen Elementes (Spiegel oder Prisma o.dgl.) können dabei verschiedenste Zusatzeffekte erzielt werden, wie etwa auch Streuung o.dgl.

Weitere Angaben sind der Bezugszeichenliste und den Figuren selbst entnehmbar.

### Bezugszeichenliste

- 1 a,b: Vergrösserungswechsler
- 2 a,b: Beobachtungsstrahlengang, Beobachtungsstrahlengänge
- 3 a,b: Beleuchtungsstrahlengang, Teilbeleuchtungsstrahlengänge, paralleler Strahlengang zu (2)
- 4: Objekt
- 5: Gehäuse
- 6: Zoomglieder, 6a für (2) und 6b für (3)
- 7: Linsenschieber, 7a,b
- 8: Hauptobjektiv, 8a,b
- 9: Achsen der Beobachtungsstrahlengänge, 9a,b
- 10: Längsachse des Raumes
- 11: Achse des Beleuchtungsstrahlenganges
- 12: zwei Umlenkspiegel für Teilstrahlengänge
- 13: Beleuchtung
- 14: Fluoreszenzlichtquelle
- 15: Sperrfilter, 15a-d
- 16: Erregerfilter, 16a-d
- 17: Filterträger, 17a-c
- 18: zusätzliches Sperrfilter
- 19: Wechselfilterträger, 19a-h
- 20: Aufnahme für (17)
- 21: Verschluss
- 24: Teilspiegelfläche für (23)
- 25: Okular
- 26: optisches Element
- 27: emittiertes Licht
- 28: Modul
- 29: Faltenbalg
- 30: optische Achse des Hauptobjektivs
- 31: Spiegel, 31a,b
- 32: Anschluss
- 33 a,b: Kanal für Filterschieber, 33a,b
- 34: federbelasteter Schwenkmechanismus
- 35: Raststellen
- 36: 3 Rastglied
- 37: Schwenkachse
- 38: Stellwand
- 40: Lichtquelle
- 41: Beschriftungsfeld
- 42: Blende
- 43: Prisma
- 44: Binokularträger
- 45: Anschluss
- 46: Klemmschraube
- 47: Sperrschieber, 47a,b
- 48: Schiene
- 49: Klemmschraube
- 50: Anschluss
- 51: Feder
- 52: Versatz
- α: Winkel

## Patentansprüche

1. Mikroskop mit wenigstens einem Beobachtungsstrahlengang (2), der ein Objektiv und einen Vergrösserungswechsler (1) mit ersten Linsengliedern zum Ändern der Vergrösserung des Beobachtungsstrahlenganges (2) durchsetzt, **dadurch gekennzeichnet, dass** der Vergrösserungswechsler (1) wenigstens einen, zum Beobachtungsstrahlengang (2) wenigstens annähernd parallelen Beleuchtungsstrahlengang (3) mit zweiten Linsengliedern zum Ändern der Vergrösserung des Beleuchtungsstrahlenganges (3) für die Beleuchtung des zu betrachtenden Objektes (4) aufweist.

2. Stereomikroskop mit zwei stereoskopischen, Beobachtungsstrahlengängen (2), die ein Objektiv und einen Vergrösserungswechsler (1) mit ersten Linsengliedern zum Ändern der Vergrösserung des Beobachtungsstrahlenganges (2) durchsetzen, **dadurch gekennzeichnet, dass** der Vergrösserungswechsler (1) wenigstens einen, zum Beobachtungsstrahlengang (2) wenigstens annähernd parallelen Beleuchtungsstrahlengang (3) mit zweiten Linsengliedern zum Ändern der Vergrösserung des Beleuchtungsstrahlenganges (3) für die Beleuchtung des zu betrachtenden Objektes (4) aufweist.

3. Mikroskop nach Anspruch 1 oder 2, bei dem der Vergrösserungswechsler (1) als Zoom ausgebildet ist, mit wenigstens einem Beleuchtungsstrahlengang (3), das optische Zoomglieder (6) auf wenigstens einem Linsenschieber (7) umfasst, wobei beide Strahlengänge (2,3) die Ebene des Hauptobjektivs (8) durchsetzen, **dadurch gekennzeichnet, dass** alle Strahlengänge (2,3) im Bereich des Zooms (1) wenigstens annähernd parallel verlaufen, und dass das Zoom (1) auch wenigstens ein Zoomglied (6b) im Beleuchtungsstrahlengang (3) aufweist, das an dem Linsenschieber (7) so angeordnet ist, dass eine Vergrösserungsänderung im Beobachtungsstrahlengang (2) zu einer Beleuchtungsprojektionsänderung führt, die im Wesentlichen der der jeweiligen Vergrösserungsänderung entsprechenden Bildausschnittsänderung am Objekt (4) entspricht.

4. Mikroskop nach einem der vorhergehenden Ansprüche, **dadurch gekennzeichnet, dass** alle Strahlengänge (2,3) ein gemeinsames Hauptobjektiv (8) durchsetzen, oder dass dem bzw. den Beobachtungsstrahlengängen (2) wenigstens ein Hauptobjektiv (8a) und dem Beleuchtungsstrahlengang (3) ein vergleichbares Hauptobjektiv (8b) zugeordnet ist.

5. Mikroskop nach einem der vorhergehenden Ansprüche, **dadurch gekennzeichnet, dass** alle Strahlengänge (2,3) im Bereich des Vergrösserungswechslers (1) in einem zylinderförmigen Raum laufen, und dass die Achsen (9) der Beobachtungsstrahlengänge (2) in einer Ebene liegen, die ca. 3 bis 5mm - insbesondere 4 mm - von einer Radialebene durch die Längsachse (10) des Raumes entfernt parallel zu dieser Radialebene liegt, und/oder dass die Achsen (9) des bzw. der Beobachtungsstrahlengänge (2) in einem anderen Abstand zur Längsachse (10) des Raumes liegen, als die Achse (11) des Beleuchtungsstrahlenganges (3).

6. Mikroskop nach einem der vorhergehenden Ansprüche, **dadurch gekennzeichnet, dass** der Beleuchtungsstrahlengang (3) vor, im, oder nach dem Vergrösserungswechsler (1) in zwei Teilbeleuchtungsstrahlengänge (3a,3b) aufgeteilt ist, die im Querschnitt betrachtet etwa halbzylinderförmig ausgebildet sind und vorzugsweise zur - durch die Achsen (9) der Beobachtungsstrahlengänge (2) aufgespannten-Ebene etwa spiegelverkehrt, vorzugsweise mit der Zylinderwölbung einander zugewandt, angeordnet sind, und wobei die beiden Teilstrahlengänge (3) vorzugsweise durch je zwei Umlenkspiegel (12) erzeugt bzw. gegebenenfalls zwischen Vergrösserungswechsler (1) und Hauptobjektiv (8) zu einem einzigen Beleuchtungsstrahlengang (3) wieder zusammengeführt werden.

7. Mikroskop nach einem der vorhergehenden Ansprüche mit einer Beleuchtung (13), **dadurch gekennzeichnet, dass** die Beleuchtung (13) wenigstens eine Fluoreszenzlichtquelle (14) aufweist, die sich des Beleuchtungsstrahlenganges (3) bedient, wobei im Beobachtungsstrahlengang (2) wenigstens ein Sperrfilter (15) für kurzwellige Lichtstrahlen angeordnet ist, und dass der Beleuchtungsstrahlengang (3) vorzugsweise wenigstens ein Erregerfilter (16) für eine Bandbreitenbegrenzung des Fluoreszenzlichtes aufweist.

8. Mikroskop nach Anspruch 7, **dadurch gekennzeichnet, dass** das Sperrfilter (15) und das Erregerfilter (16) in einer Ebenevorzugsweise auf einem gemeinsamen Filterträger (17) - liegen.

9. Mikroskop nach einem der Ansprüche 7 oder 8, **dadurch gekennzeichnet, dass** in dem bzw. den Beobachtungsstrahlengängen (2) wenigstens ein zusätzliches UV-Sperrfilter (18) angeordnet ist.

10. Mikroskop nach einem der Ansprüche 7 bis 9, **dadurch gekennzeichnet, dass** ein Wechselfilterträger (19) vorgesehen ist, der durch die Strahlengänge (2,3) durchsetzt wird und wenigstens zwei unterschiedliche Sätze von Sperr- und/oder Erregerfiltem (15,16) aufweist, die durch Verschieben oder Verschwenken des Wechselfilterträgers (19) den entsprechenden Strahlengängen (2,3) alternativ vorschaltbar sind, wobei vorzugsweise der Wechselfilterträger (19) zum Zwecke einer Normallichtbeleuchtung eine lichtdurchlässige Stellung ohne Sperr- und Erregerfilter (15,16) erlaubt.

11. Mikroskop nach Anspruch 10, **dadurch gekennzeichnet, dass** der Wechselfilterträger (19) Aufnahmen (20) für austauschbare Filterträger (17) aufweist, die vorzugsweise je ein Paar Erreger- und Sperrfilter (15,16) aufnehmen.

12. Mikroskop nach einem der Ansprüche 7 bis 11, **dadurch gekennzeichnet, dass** der Beleuchtungs- und/oder der bzw. die Beobachtungsstrahlengänge (3,2) mit einem entfembaren Verschluss (21) versehen ist bzw. sind, der beim Wechseln eines Filters (15,16) den einen und/oder den anderen Strahlengang (2,3) abdeckt, wobei der Verschluss (21) vorzugsweise mit dem Wechselfilterträger (19) bewegungsgekoppelt ist.

13. Mikroskop nach einem der Ansprüche 7 bis 12, **dadurch gekennzeichnet, dass** die Filter (15,16) und insbesondere der Wechselfilterträger (19) in einem vom Mikroskop entfernbaren Filter- bzw. Fluoreszenzmodul (28) eingebaut sind, welches Modul (28) an seinen beiden, die Strahlengänge querenden Seiten mit universellen Anschlüssen für Mikroskopaufbauten versehen ist.

14. Mikroskop nach einem der vorhergehenden Ansprüche, **dadurch gekennzeichnet, dass** mehr als ein, vorzugsweise zwei Beleuchtungsstrahlengänge (3) vorgesehen sind, von denen einer Normallicht und der andere Fluoreszenzlicht führt, wobei die beiden Strahlengänge (3) vorzugsweise alternativ (umschaltbar) und/oder gleichzeitig benutzbar sind.

15. Mikroskop nach einem der vorhergehenden Ansprüche, **dadurch gekennzeichnet, dass** der Beleuchtungsstrahlengang (3) im objektnahen Bereich über wenigstens ein optisches Element (26) verfügt, das den Beleuchtungsstrahlengang (3) im Betriebszustand in einem Winkel α zum Beobachtungsstrahlengang (2) auf das Objekt (4) lenkt.

## Claims

1. Microscope with at least one observation beam path (2), which travels through an objective and a magnification power changer (1) with first lens elements for changing the magnification of the observation beam path (2), **characterised in that** the magnification power changer (1) comprises at least one illuminating beam path (3), which is at least approximately parallel to the observation beam path (3), with two lens elements for changing the magnification of the illuminating beam path (3) for illumination of the object to be observed (4).

2. Stereomicroscope with two stereoscopic observation beam paths (2), which pass through an objective and a magnification power changer (1) with first lens elements for changing the magnification of the observation beam path (2), **characterised in that** the magnification power changer (1) comprises at least one illuminating beam path (3), which is at least approximately parallel to the observation beam path (2), with two lens elements for changing the magnification of the illuminating beam path (3) for illumination of the object to be observed (4).

3. Microscope according to claim 1 or 2, in which the magnification power changer (1) is constructed as a zoom lens device, with at least one illuminating beam path (3), which comprises the optical zoom elements (6) on at least one lens slide (7), wherein the two beam paths (2, 3) pass through the plane of the main objective (8), **characterised in that** all beam paths (2, 3) extend at least approximately parallelly in the region of the zoom lens device (1) and that the zoom lens device (1) also has in the illuminating beam path (3) at least one zoom element (6b) which is so arranged at the lens slide (7) that a magnification power change in the observation beam path (2) leads to an illumination projection change substantially corresponding to the image area change, which corresponds to the respective magnification power change, at the object (4).

4. Microscope according to one of the preceding claims, **characterised in that** all beam paths (2, 3) pass through a common main objective (8) or that at least one main objective (8a) is associated with the observation beam path or paths (2) and a comparable main objective (8b) is associated with the illuminating beam path (3).

5. Microscope according to one of the preceding claims, **characterised in that** all beam paths (2, 3) extend in the region of the magnification power changer (1) in a cylindrical space and that the axes (9) of the observation beam paths (2) lie in a plane which lies at a spacing of approximately 3 to 5 mm - especially 4 mm - from and parallel to a radial plane through the longitudinal axis (10) of the space and/or that the axis or axes (9) of the observation beam path or paths (2) lies or lie at a spacing from the longitudinal axis (10) of the space different from the axis (11) of the illuminating beam path (3).

6. Microscope according to one of the preceding claims, **characterised in that** the illuminating beam path (3) is divided before, in or after the magnification power changer (1) into two partial illuminating beam paths (3a, 3b), which considered in cross-section are formed to be approximately semi-cylindrical and are arranged preferably approximately mirror-inverted relative to the plane spanned by the axes (9) of the observation beam paths (2) and preferably facing one another by the cylinder curvature; and wherein the two partial beam paths (3) are preferably each produced by a respective one of two deflecting mirrors (12) and a given case are recombined into a single illuminating beam path (3) between the magnification power changer (1) and main objective (8).

7. Microscope according to one of the preceding claims with an illuminating means (13), **characterised in that** the illuminating means (13) comprises at least one fluorescent light source (14) operating the illuminating beam path (3), wherein at least one suppression filter (15) for short-wave light beams is arranged in the observation beam path (2) and that the illuminating beam path (3) preferably comprises at' least one excitation filter (16) for a bandwidth limitation of the fluorescent light.

8. Microscope according to claim 7, **characterised in that** the suppression filter (15) and the excitation filter (16) lie in one plane, preferably on a common filter support (17).

9. Microscope according to one of claims 7 and 8, **characterised in that** at least one additional ultraviolet suppression filter (18) is arranged in the observation beam path or paths (2).

10. Microscope according to one of claims 7 to 9, **characterised in that** an exchanger filter support (19) is provided, which is passed through by the beam paths (2, 3) and comprises at least two different sets of suppression and/or excitation filters (15, 16), which can be alternately connected in front of the corresponding beam paths (2, 3) by sliding or pivoting the exchange filter support (19), wherein the exchange filter support (19) preferably allows a light transmission setting without suppression and excitation filters (15, 16) for the purpose of normal light illumination.

11. Microscope according to claim 10, **characterised in that** the changeover filter support (19) has receptacles (20) for exchangeable filter supports (17), which preferably each receive a respective pair of excitation and suppression filters (15, 16).

12. Microscope according to one of claims 7 to 11, **characterised in that** the illuminating and/or the observation beam path or paths (3, 2) is or are provided with a removable closure (21), which on exchange of a filter (15, 16) covers one and/or the other beam path (2, 3), wherein the closure (21) is preferably movably coupled with the exchange filter support (19).

13. Microscope according to one of claims 7 to 12, **characterised in that** the filters (15, 16) and particularly the changeover filter support (19) are incorporated in a filter or fluorescence module (28) removable from the microscope, which module (28) is provided at its two sides crossing the beam paths with universal connections for microscope accessories.

14. Microscope according to one of the preceding claims, **characterised in that** more than one, preferably two, illuminating beam paths (3) are provided, of which one guides normal light and the other fluorescent light, wherein the two beam paths (3) are preferably usable alternatively (switchable over) and/or simultaneously.

15. Microscope according to one of the preceding claims, **characterised in that** the illuminating beam path (3) has in the vicinity of the object at least one optical element (26) which in the operational state guides the illuminating beam path (3) at an angle α relative to the observation beam path (2) to the object (4).

## Revendications

1. Microscope avec au moins une trajectoire des rayons d'observation (2), qui traverse un objectif et un convertisseur de grossissement (1) avec des premiers organes à lentille pour la modification du grossissement de la trajectoire des rayons d'observation (2), **caractérisé en ce que** le convertisseur de grossissement (1) présente au moins une trajectoire des rayons d'éclairement (3) au moins presque parallèle à la trajectoire des rayons d'observation (2) avec deux organes à lentille pour la modification du grossissement de la trajectoire des rayons d'éclairement (3) pour l'éclairement de l'objet (4) à observer.

2. Stéréomicroscope avec deux trajectoires des rayons d'observation stéréoscopiques (2), qui traversent un objectif et un convertisseur de grossissement (1) avec de premiers organes à lentille pour la modification du grossissement de la trajectoire des rayons d'observation (2), **caractérise en ce que** le convertisseur de grossissement (1) présente au moins une trajectoire des rayons d'éclairement (3) au moins presque parallèle à la trajectoire des rayons d'observation (2) avec deux organes à lentille pour la modification du grossissement de la trajectoire des rayons d'éclairement (3) pour l'éclairement de l'objet (4) à observer.

3. Microscope selon la revendication 1 ou 2, dans lequel le convertisseur de grossissement (1) a la forme d'un zoom, avec au moins une trajectoire des rayons d'éclairement (3), qui comporte des organes optiques de zoom (6) sur au moins un coulisseau de lentille (7), et les deux trajectoires des rayons (2,3) traversent le plan de l'objectif principal (8), **caractérisé en ce que** toutes les trajectoires des rayons (2,3) passent, dans la zone du zoom (1), au moins presque parallèlement, et **en ce que** le zoom (1) présente également au moins un organe de zoom (6b) dans la trajectoire des rayons d'éclairement (3), qui est agencé sur le coulisseau de lentille (7) de façon qu'une modification de grossissement dans la trajectoire des rayons d'observation (2) conduise à une modification de projection d'éclairement qui correspond essentiellement à une modification de la coupe de l'image correspondante de chaque modification de grossissement sur l'objet (4).

4. Microscope selon l'une quelconque des revendications précédentes, **caractérisé en ce que** toutes les trajectoires des rayons (2,3) traversent un objectif principal commun (8) ou bien **en ce qu'**à la ou respectivement aux trajectoires des rayons d'observation (2) est affecté au moins un objectif principal (8a) et à la trajectoire des rayons d'éclairement (3) un objectif principal (8b) comparable.

5. Microscope selon l'une quelconque des revendications précédentes, **caractérisé en ce que** toutes les trajectoires des rayons (2,3), dans la zone du convertisseur de grossissement (1), passent dans un espace cylindrique et **en ce que** les axes (9) des trajectoires des rayons d'observation (2) se trouvent dans un plan qui se trouve à environ 3 à 5 mm- en particulier 4 mm- d'un plan radial à travers l'axe longitudinal (10) de l'espace, parallèlement à ce plan radial et/ou que les axes (9) de la trajectoire ou respectivement des trajectoires des rayons d'observation (2) se trouvent à une autre distance par rapport à l'axe longitudinal (10) de l'espace que l'axe (11) de la trajectoire des rayons d'éclairement.

6. Microscope selon l'une quelconque des revendications précédentes, **caractérisé en ce que** la trajectoire des rayons d'éclairement (3) est divisée avant, dans ou après le convertisseur de grossissement (1) en deux trajectoires partielles des rayons d'éclairement (3a,3b) qui, en regardant en section transversale, sont de configuration à peu près hémicylindrique et sont avantageusement agencées inversées à peu près à la façon d'un miroir par rapport au plan passant par les axes (9) des trajectoires des rayons d'observation (2) avantageusement tournés l'un vers l'autre par la courbure du cylindre et les deux trajectoires partielles des rayons (3) sont avantageusement produites par deux miroirs de déviation (12) ou respectivement, le cas échéant à nouveau rassemblées, entre convertisseur de grossissement (1) et objectif principal (8), en une seule trajectoire des rayons d'éclairement (3).

7. Microscope selon l'une quelconque des revendications précédentes avec un éclairement (13), **caractérisé en ce que** l'éclairement (13) présente au moins une source de lumière fluorescente (14) qui alimente la trajectoire des rayons d'éclairement (3) et dans la trajectoire des rayons d'observation (2) est agencé au moins un filtre d'arrêt (15) pour les rayons lumineux de courte longueur d'onde et **en ce que** la trajectoire des rayons d'éclairement (3) présente avantageusement au moins un filtre d'excitation (16) pour délimiter la largeur de bande de la lumière fluorescente.

8. Microscope selon la revendication 7, **caractérisé en ce que** le filtre d'arrêt (15) et le filtre d'excitation (16) se trouvent dans un plan-avantageusement sur un support de filtre commun (17).

9. Microscope selon l'une quelconque des revendications 7 ou 8, **caractérisé en ce que** dans la ou respectivement les trajectoires des rayons d'observation (2) est agencé au moins un filtre d'arrêt des UV supplémentaire (18).

10. Microscope selon l'une quelconque des revendications 7 à 9, **caractérisé en ce qu'**un support de filtre alterné (19) est prévu, qui est traversé par les trajectoires des rayons (2,3) et qui présente au moins deux jeux différents de filtres d'arrêt et/ou d'excitation (15,16) qui, par déplacement ou pivotement du support de filtre alterné (19) peuvent être mis de façon alternative dans les trajectoires correspondantes des rayons (2,3) et avantageusement le support de filtre alterné (19) permet, dans le but d'un éclairement linéaire normal, une position de passage sans filtre d'arrêt ni d'excitation (15,16).

11. Microscope selon la revendication 10, **caractérisé en ce que** le support de filtre alterné (19) présente des logements pour supports de filtre échangeables (17) qui avantageusement - reçoivent chacun une paire de filtres d'excitation-arrêt (15,16).

12. Microscope selon l'une quelconque des revendications 7 à 11, **caractérisé en ce que** la trajectoire des rayons d'éclairement et/ou la ou les trajectoires des rayons d'observation (3,2) est ou respectivement sont pourvues d'une fermeture enlevable (21) qui, lors du changement de filtre (15,16), couvre l'une et/ou l'autre trajectoire des rayons (2,3), la fermeture (21) étant avantageusement couplée en mouvement avec le support de filtre alterné (19).

13. Microscope selon l'une quelconque des revendications 7 à 12, **caractérisé en ce que** les filtres (15,16) et en particulier le support de filtre alterné (19) sont incorporés dans un module de filtre ou de fluorescence (28) pouvant être éloigné du microscope, lequel module (28) est pourvu, sur ses deux côtés traversant les trajectoires des rayons, de raccordements universels pour structures de microscope.

14. Microscope selon l'une quelconque des revendications précédentes, **caractérisé en ce que** plus d'une, avantageusement deux trajectoires des rayons d'éclairement (3) sont prévues, dont une conduit de la lumière normale et l'autre de la lumière fluorescente et les deux trajectoires des rayons (3) sont utilisables avantageusement de façon alternée (commutable) et/ou simultanée.

15. Microscope selon l'une quelconque des revendications précédentes, **caractérisé en ce que** la trajectoire des rayons d'éclairement (3) dispose, dans la zone proche de l'objet, d'au moins un élément optique (26) qui dévie la trajectoire des rayons 'd'éclairement (3) à l'état de fonctionnement à un angle α par rapport à la trajectoire des rayons d'observation (2) sur l'objet (4).
